(19) Europäisches Patentamt
European Patent Office
Office européen des brevets

(11) **EP 1 322 978 B1**

(12) **FASCICULE DE BREVET EUROPEEN**

(45) Date de publication et mention de la délivrance du brevet:
**23.03.2016 Bulletin 2016/12**

(21) Numéro de dépôt: **01972197.6**

(22) Date de dépôt: **25.09.2001**

(51) Int Cl.:
*G02B 6/28* *(2006.01)* *H01S 3/094* *(2006.01)*
*G02B 6/036* *(2006.01)*

(86) Numéro de dépôt international:
**PCT/FR2001/002963**

(87) Numéro de publication internationale:
**WO 2002/027369 (04.04.2002 Gazette 2002/12)**

(54) **DISPOSITIF D'INJECTION POUR FIBRE OPTIQUE ET PROCEDE DE PREPARATION**

EINKOPPELVORRICHTUNG FÜR EINE OPTISCHE FASER UND ZUGEHÖRIGES HERSTELLUNGSVERFAHREN

INJECTION DEVICE FOR OPTICAL FIBRE AND PREPARATION METHOD

(84) Etats contractants désignés:
**AT BE CH CY DE DK ES FI FR GB GR IE IT LI LU MC NL PT SE TR**

(30) Priorité: **26.09.2000 FR 0012198**

(43) Date de publication de la demande:
**02.07.2003 Bulletin 2003/27**

(73) Titulaire: **Lea Photonics**
**22300 Lannion (FR)**

(72) Inventeurs:
• **EVEN, Patrick**
  **F-22300 Lannion (FR)**
• **METAYER, Benoit**
  **F-22300 Lannion (FR)**
• **CADIER, Benoit**
  **F-22700 Perros Guirec (FR)**
• **PUREUR, David**
  **F-22700 Perros-Guirec (FR)**

(74) Mandataire: **Regimbeau**
**20, rue de Chazelles**
**75847 Paris Cedex 17 (FR)**

(56) Documents cités:
EP-A- 0 320 990    EP-A- 0 371 675
EP-A- 0 893 862    FR-A1- 2 426 919
US-A- 4 712 858    US-A- 4 784 452
US-A- 4 962 986    US-A- 5 999 673
US-A- 6 157 027

EP 1 322 978 B1

**Description**

La présente invention concerne le domaine des fibres optiques.

Plus précisément la présente invention concerne un dispositif d'injection optique pour fibre optique, c'est à dire un dispositif conçu pour injecter un signal optique dans une fibre.

La présente invention peut trouver notamment application dans la réalisation de lasers ou amplificateurs optiques.

La réalisation d'un laser fibré monomode de puissance ou d'un amplificateur à fibre à fort gain, requiert des lasers de pompe de forte puissance. Ce sont généralement des diodes à semi-conducteurs. On connaît en particulier des diodes multimodes. Cependant les caractéristiques du faisceau de sortie de celles-ci ne permettent pas un couplage optique satisfaisant dans un coeur monomode de fibre. Ainsi aujourd'hui seule une diode de pompe monomode peut être couplée efficacement dans le coeur monomode d'une fibre.

Les lasers ou respectivement les amplificateurs à fibre sont de ce fait limités en puissance, respectivement en gain, par la puissance des diodes de pompe monomode.

Pour injecter de la lumière provenant d'une diode de pompe dans une fibre, on peut en théorie utiliser une extrémité de la fibre. En utilisant une optique adaptée comme par exemple un système de lentille, il est possible d'obtenir un couplage optique efficace [ref. 1]. Cependant ceci implique que seule l'autre extrémité de la fibre est alors disponible. Ce type d'injection ne permet donc pas d'avoir accès aux deux extrémités de la fibre. Or pour un amplificateur à fibre optique, les deux extrémités sont requises. Il n'est donc pas possible d'utiliser ce type d'injection.

Par ailleurs la puissance des diodes de pompe n'est parfois pas suffisante pour certaines applications laser ou amplificateur. Il serait alors souhaitable de combiner la puissance de plusieurs diodes pour obtenir la puissance requise. Mais une injection de type longitudinale en extrémité de fibre ne permet pas facilement ce type de multiplexage.

D'autres méthodes d'injection telle que celle décrite dans [ref. 2], ont été proposées pour essayer de coupler efficacement des diodes de pompe dans des fibres ayant des sections multimodes importantes. Néanmoins le fait d'entailler la fibre comme proposé dans ce document, fragilise celle-ci. Les risques de cassures au cours du temps sont importantes. Ce procédé ne satisfait donc pas les qualifications requises pour les produits utilisés dans le domaine des télécommunications.

Une autre méthode d'injection est celle proposée par la [ref. 3]. Selon cette méthode, un faisceau de fibre est fusionné puis effilé pour atteindre les dimensions de la section multimode d'une fibre d'injection. Le rapport entre les ouvertures numériques des fibres du faisceau et celle de la fibre d'injection, et le rapport des sections du faisceau et de la section multimode de la fibre d'injection, permettent de calculer la configuration optimale pour un couplage optique efficace. Pour optimiser le couplage, la section multimode de la fibre d'injection est généralement hexagonale ou en étoile. Pour avoir un bon couplage il faut respecter la conservation de l'étendue géométrique des N fibres d'entrées et de la fibre d'injection. Généralement le nombre de fibres dans le faisceau est limité à sept. Pour avoir accès aux deux extrémités de la fibre dans le cas de la réalisation d'un amplificateur, il faut que la fibre centrale du faisceau soit une fibre monomode.

La [ref. 4] propose également différents systèmes d'injection par la tranche. Cependant en pratique les systèmes proposés dans ce document, qui utilisent une fibre à double gaine et une section multimode, présentant une grande ouverture numérique, typiquement 0,4, et une fibre amorce à section rectangulaire et également une grande ouverture numérique, ne donnent pas satisfaction.

La présente invention a pour but de proposer un procédé de préparation d'un dispositif d'injection pour fibre optique et le dispositif d'injection ainsi obtenu.

Ce but est atteint dans le cadre de la présente invention, grâce à un procédé et à un dispositif tels que définis dans les revendications indépendantes annexées.

Le document US 5999673 quant à lui traite du couplage entre une source de lumière multi-mode et une fibre principale via une fibre intermédiaire. Ce couplage est formé par vrillage de la fibre intermédiaire autours de la fibre principale. Au niveau de la zone appliquée sur la fibre principale, la section de la fibre intermédiaire décroit progressivement.

Les documents EP 0371675 et US 4784452 préconisent d'encapsuler une zone de couplage entre deux fibres à l'aide d'un matériau d'indice approprié.

Le document US 4962986 propose un couplage entre une source et une fibre susceptibles de déplacement relatif.

Le document EP 0320990 divulgue un couplage entre deux fibres par interposition d'une couche de colle intermédiaire au niveau de l'interface entre ces fibres.

Le document FR 7 815 796 divulgue un couplage entre deux fibre par fusion au niveau de l'interface entre ces deux fibres.

D'autres caractéristiques, buts et avantages de la présente invention apparaîtront à la lecture de la description détaillée qui va suivre, et en regard des dessins annexés donnés à titre d'exemples non limitatifs et sur lesquels :

- la figure 1 représente une vue en coupe transversale d'une fibre à double gaine utilisée de préférence en tant que fibre principale dans le cadre de la présente invention,
- la figure 2 représente schématiquement un dispositif d'injection multiple conforme à la présente invention,
- la figure 3 représente les indices optiques des différents éléments composant respectivement une fibre à coeur multimode formant fibre auxiliaire et une fibre à coeur monomode formant fibre principale, utilisées dans le cadre de la présente invention,
- la figure 4 schématise le guidage d'un faisceau optique dans une fibre multimode formant fibre auxiliaire,
- la figure 5 schématise l'injection mise en oeuvre dans le cadre de la présente invention,
- la figure 6 représente l'angle limite de réflexion totale en fonction de l'ouverture numérique des fibres utilisées,
- la figure 7 schématise l'extrémité biseautée d'une fibre amorce utilisé en tant que fibre auxiliaire dans le cadre de la présente invention,
- la figure 8 représente une fibre amorce auxiliaire placée sur la tranche d'une fibre principale, conforme à la présente invention, respectivement en vue latérale pour la figure 8a et en vue de dessus pour la figure 8b,
- la figure 9 schématise un premier mode de fixation d'une fibre amorce auxiliaire, sur une fibre principale, conforme à la présente invention,
- la figure 10 schématise un second mode de fixation d'une fibre amorce auxiliaire, sur une fibre principale, conforme à la présente invention,
- les figures 11 a et 11 b illustrent deux variantes d'injection conformes à la présente invention, respectivement à deux et quatre diodes.

Comme on l'a indiqué précédemment, la structure de base du dispositif d'injection conforme à la présente invention, comprend :

- une fibre principale 100, et
- une fibre auxiliaire 200 dont l'extrémité biseautée 210 est placée sur la tranche de la fibre principale 100, la fibre auxiliaire 200 possédant une ouverture numérique inférieure à l'ouverture numérique de la fibre principale 100.

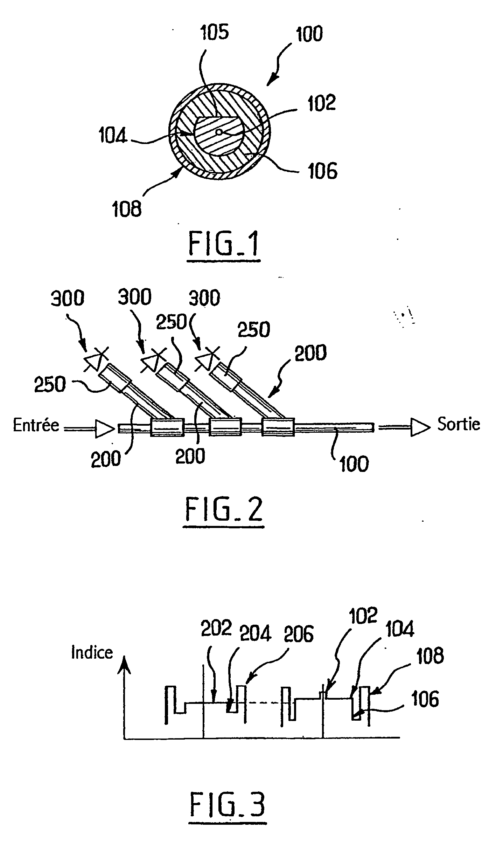

De préférence dans le cadre de la présente invention, la fibre principale 100 est une fibre à double gaine et coeur monomode du type illustré sur la figure 1.

On trouvera un descriptif général d'une telle fibre 100 dans le document [ref. 5].

La fibre 100 illustrée sur la figure 1 annexée comporte un coeur 102 monomode, une section multimode 104 qui présente au moins un méplat 105 et entoure le coeur 102, une gaine bas indice 106 et une gaine mécanique externe 108. Une telle fibre 100 à double gaine possède généralement un coeur monomode 102 dopé avec une ou plusieurs terres rares qui sert de milieu amplificateur et guide optique pour le champ monomode. Les dimensions de la fibre sont généralement de l'ordre de 4 $\mu$m de diamètre pour le coeur 102 et $21.10^3$ $\mu$m$^2$ pour la section multimode 104. L'indice de la gaine bas indice 106 est typiquement de 1.35.

Cependant pour certaines applications, la fibre peut présenter des caractéristiques différentes. Par exemple le coeur peut avoir un diamètre supérieur à 4 $\mu$m.

La section multimode 104 possède avantageusement un indice inférieur à celui du coeur 102. La gaine bas indice 106 possède avantageusement un indice inférieur à celui de la section multimode 104, tandis que la gaine externe mécanique 108 possède un indice le plus élevé, supérieur à celui du coeur 102.

En variante, la fibre principale 100 utilisée dans le cadre de la présente invention peut être une fibre multimode plus conventionnelle.

La fibre auxiliaire 200 est une fibre possédant un coeur multimode 202, entouré d'une gaine optique 204 d'indice inférieur et une gaine mécanique extérieure 206, d'indice supérieur à celui du coeur 202.

Comme on l'a illustré sur la figure 2, on peut associer plusieurs fibres auxiliaires 200 à une fibre principale 100.

L'injection transversale proposée dans le cadre de la présente invention, permet ainsi un couplage optique efficace de une ou plusieurs diodes de pompe 300, placée(s) respectivement en regard de l'extrémité libre d'une fibre auxiliaire 200, dans la section multimode 104 d'une fibre 100. Les extrémités de cette fibre 100 sont alors disponibles.

Les diodes 300 sont avantageusement des diodes de pompe multimodes de puissance.

Pour obtenir un couplage optimum, il est préférable d'avoir un pigtail de diode, c'est à dire entre chaque diode 300 et l'entrée de la fibre auxiliaire 200 associée, un tronçon de fibre 250 adapté à la diode et dont la taille de coeur et l'ouverture numérique sont similaires à celle de la fibre multimode amorce 200. Typiquement le pigtail 250 est une fibre 100/125, d'ouverture numérique 0.15. Le pigtail 250 est soudé selon un procédé standard à la fibre amorce 200.

Lorsque la diode 300 n'est pas pigtailée, il est possible de coupler directement la lumière dans la fibre amorce 200 à l'aide d'un système de lentilles.

La fibre multimode amorce auxiliaire 200 a un coeur 202 d'indice inférieur ou égale à l'indice de la section multimode 104 de la fibre principale 100 (comme on le voit sur la figure 3). Plus la différence d'indice est importante, moins la propagation du champ électromagnétique dans la section multimode 104 est perturbée par la traversé du point de jonction. Dans le cas d'une différence d'indice supérieure ou égale à la différence d'indice entre la section multimode 104 et la gaine bas indice 106, la propagation du champ n'est pas affectée à la traversé du point de jonction.

L'ouverture numérique de la fibre amorce 200 doit être suffisamment petite, typiquement cette ouverture numérique ON est de 0.15, tout en restant compatible avec un bon taux de couplage optique avec la diode de pompe 300.

La fibre principale 100 doit avoir la plus grande ouverture numérique possible, typiquement ON : 0.4. La différence d'indice entre la section multimode 104 et la gaine bas indice 106 doit être la plus grande possible. De préférence pour obtenir de telles ouvertures numériques, la gaine bas indice 106 est un silicone.

La présente invention repose notamment sur les considérations suivantes.

Une analyse des angles limites à l'interface entre deux milieux d'indices différents, souligne l'importance des ouvertures numériques des fibres principales 100 et auxiliaire 200.

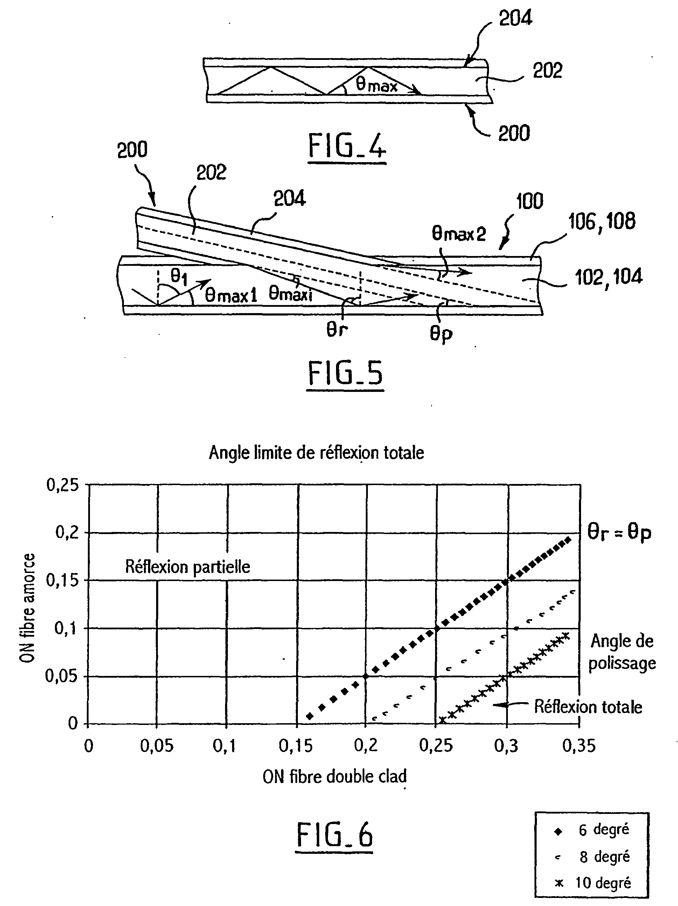

Si $n_{co}$ et $n_{ga}$ sont respectivement l'indice du coeur et de la gaine optique d'une fibre multimode telle que schématisée sur la figure 4, l'angle maximum de réflexion à l'interface coeur/gaine est donné par :

$$\theta_{max} = a\ sin\ (ON/\ n_{co})\ \ (1)$$

avec $ON = \sqrt{n^2_{co} - n^2_{ga}}\ \ (2)$ ou ON représente l'ouverture numérique de la fibre.

Considérons le cas ou la section multimode 104 de la fibre 100 et le coeur 202 de la fibre amorce 200 ont le même indice optique. Pour avoir une réflexion totale, on obtient la relation suivante entre les ouvertures numériques :

$$\theta_1 + \theta_{max1} = \pi/2\ (3)$$

avec $\theta_1 = a\ sin\ (n_{ga\ 2}/\ n_{co2})\ (4)$ et $\theta_r = \pi/2 - \theta_{max2} - \theta_p\ (5)$ en désignant :

- $\theta_{max1}$ : l'angle maximum pour avoir une réflexion totale dans la fibre 100 à double gaine (propagation multimode),
- $\theta_{max2}$ : l'angle maximum pour avoir une réflexion totale dans la fibre amorce auxiliaire 200,
- $\theta_r$ : l'angle de réflexion du faisceau le plus incliné provenant de la fibre amorce auxiliaire 200, sur l'interface coeur/gaine de la fibre 100
- $\theta_p$ : l'angle de polissage de la fibre amorce 200 et
- $\theta_1$ : l'angle limite à l'interface coeur/gaine de la fibre 100.

Pour avoir réflexion totale du faisceau le plus incliné provenant de la fibre amorce auxiliaire 200, sur l'interface coeur/gaine de la fibre principale 100, il faut respecter la condition :

$$\theta_r \geq \theta_1\ (6)$$

Soit

$$\pi/2 - \theta_{max1} - \theta_p \geq \theta_1\ (7)$$

Que l'on peut écrire :

$$(\pi/2) - a\ sin\ (ON_1/n_{co1}) - \theta_p \geq a\ sin\ (n_{ga2}/n_{co2}) = a\ sin\ (1 - (ON^2_2/n^2_{co2}))^{1/2}\ \ (8)$$

Soit

$$a \sin (ON_1/n_{co1}) \geq (\pi/2) - \theta_p - a \sin (1 - (ON_2^2/n_{co2}^2))^{1/2} \quad (9)$$

On a illustré sur la figure 6, l'angle limite de réflexion totale, en fonction des indices des fibres 100 et 200. La figure 6 représente trois courbes correspondant respectivement à des angles de biseau de 6, 8 et 10°, pour l'extrémité de la fibre auxiliaire 200. A gauche de ces courbes on est en réflexion partielle. Au contraire à droite de ces courbes, la réflexion est totale.

Il apparaît ainsi d'après l'équation (9) et la figure 6, qu'il faut minimiser l'ouverture numérique de la fibre amorce 200 et maximiser l'ouverture numérique de la fibre principale 100. L'angle de polissage doit être également le plus petit possible.

Le couplage optique se fait par positionnement de la fibre amorce auxiliaire 200 sur la tranche de la fibre principale 100.

A l'état assemblé, les deux fibres 100 et 200 ont leurs axes longitudinaux coplanaires.

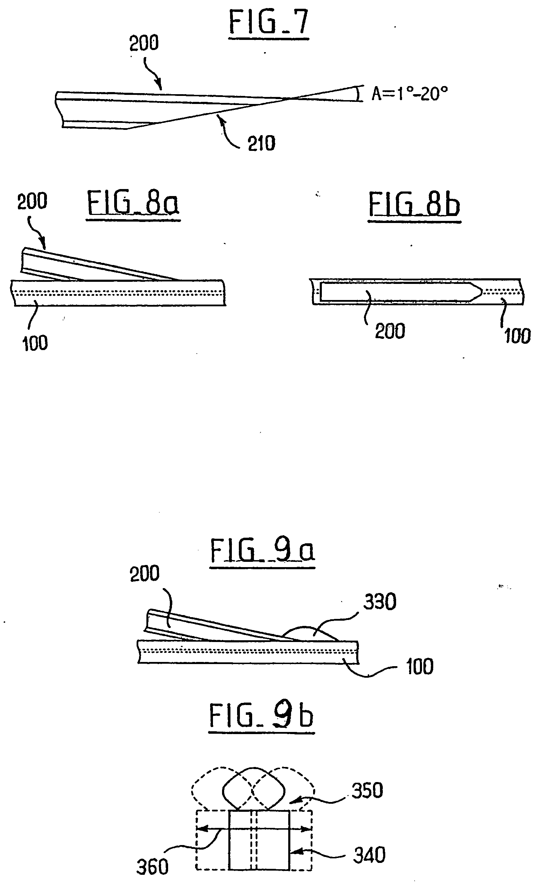

La fibre amorce auxiliaire 200 est préalablement polie à son extrémité 210 à un angle d'environ 1° à 20° (figure 7). Le polissage est effectué par un processus standard. La tolérance sur l'angle de polissage dépend de la tolérance sur les ouvertures numériques de la fibre amorce 200 et la fibre principale 100. Plus la différence d'ouverture numérique est importante, plus cet angle peut être important.

Pour une fibre amorce 200 d'ouverture numérique 0.15 et une fibre principale 100 d'ouverture numérique 0.34, l'angle de polissage est typiquement de 6°.

Le positionnement de la fibre amorce 200 sur la tranche de la fibre multimode principale 100 doit être effectué de façon précise comme on l'a schématisé sur la figure 8. Pour assurer ce positionnement, la gaine bas indice 106 de la fibre principale 100 doit au préalable être retirée sur quelques millimètres.

La fibre amorce auxiliaire 200 doit ensuite être fixée sur la tranche de la section multimode de la fibre principale 100.

Pour avoir un couplage satisfaisant, la fibre amorce 200 est fusionnée sur la tranche de la fibre principale 100.

Cette fusion peut par exemple être assurée par micro chalumeau.

La fusion est alors de préférence réalisée à l'aide d'une flamme d'un micro chalumeau de type oxydo-butane. D'autres mélanges gazeux sont également envisageables. La dimension de la flamme est telle que la zone chauffée couvre la zone de contact entre les deux fibres 100 et 200. Pour éviter la déformation de la fibre amorce 200 au cours de la fusion, on utilise un verre avec un faible Tg tel que du B2O3 pour pré-coller l'extrémité de la fibre amorce sur la fibre d'injection (comme schématisé sur la figure 9a). La température de la flamme, sa position, sa composition sont des paramètres critiques du processus de collage par fusion. Pour homogénéiser la zone chauffée, il est également possible de faire effectuer à la flamme un mouvement longitudinal oscillant comme schématisé sur la figure 9b.

Sur la figure 9a l'élément en verre de B2O3 est référencé 330. Sur la figure 9b, le chalumeau est référencé 340, sa flamme 350, et le mouvement oscillant du chalumeau 340 est schématisé par la flèche référencée 360.

Après fusion, la fibre principale 100 doit être re-gainée avec la gaine bas indice 106.

Une autre solution consiste à assurer la fixation de la fibre auxiliaire 200 par fusion au laser, par exemple à l'aide d'un laser CO2.

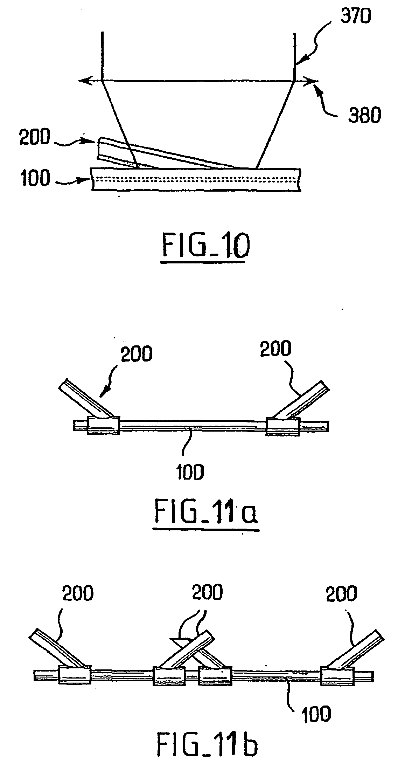

Une alternative à la fusion à l'aide d'une flamme, est en effet l'utilisation d'un laser de puissance CO2. La raie d'émission à 10.6 $\mu$m du laser CO2 est très absorbée par le verre. Un tel laser permet donc de contrôler la zone de chauffage plus précisément et est plus souple d'utilisation qu'une flamme. Le faisceau 370 est focalisé à l'aide d'une lentille 380 adaptée pour avoir une tache focale de la même dimension que l'interface des deux fibres 100, 200 à coller (tel qu'illustré sur la figure 10). Le gradient de température entre le dessus de la fibre 100 et la face inférieure est très important. L'intérêt est de pouvoir atteindre une température légèrement supérieure au Tg sur la face supérieure sans atteindre cette température au centre de la fibre 100 ou au niveau de la face inférieure. Le risque de déformation de la fibre est alors amoindri.

Après fusion, la fibre 100 doit être re-gainée avec la gaine bas indice 106. L'utilisation du verre B2O3 est également possible pour les raisons décrites précédemment.

Selon encore une autre variante préférentielle de la présente invention, la fixation de la fibre 200 est opérée par la combinaison d'une flamme et d'un laser CO2.

La fusion à l'aide d'une flamme est en effet un procédé de fabrication difficile à maîtriser. La température à l'interface entre les deux fibres 100/200 doit être stable et bien contrôlée, légèrement plus élevée que le Tg du coeur 202 de la fibre amorce 200. Une température trop élevée déforme les fibres et inversement une température trop basse ne permet pas le collage.

Le laser CO2 donne une zone de chauffe très localisée. Le gradient de température élevé, ne permet pas une homogénéisation des contraintes dans la fibre.

La combinaison des deux procédés (flamme et laser CO2) permet de s'affranchir de ces difficultés. La flamme chauffe localement les deux fibres 100 et 200 à une température inférieure au Tg. La flamme produit un gradient de température dans la fibre nettement moins important que le CO2. La quantité de chaleur nécessaire pour atteindre une température supérieure au Tg est produite par le faisceau du laser CO2. Les paramètres de réglage de la flamme sont ici moins critiques. Le contrôle de la température à l'interface se fait par réglage de la puissance du laser CO2.

Après fusion, la fibre 100 doit là encore être re-gainée avec la gaine bas indice 106. L'utilisation du verre B2O3 est également mise en oeuvre pour les raisons décrites précédemment.

Des essais conduits par la Demanderesse ont conduit aux taux de couplage suivants.

Le taux de couplage est défini par le rapport entre la puissance injectée dans la fibre amorce 200 et la puissance en sortie de fibre principale 100.

| Type de collage | Mélange de colle époxy | Fusion par flamme et/ou CO2 |
|---|---|---|
| Taux de couplage typique | 65 % - 75 % | 75 % - 85 % |

Comme il a été indiqué ci-dessus, il est possible de combiner plusieurs injection pour multiplexer la puissance des diodes de pompe.

La distance entre les différents systèmes d'injection n'est pas critique et peut varier de quelques centimètres à quelques mètres. La position le long de la fibre principale 100, des différentes injections ainsi que leurs orientations dépendent de l'application. Les figures 11a et 11b montrent respectivement un exemple de configuration pour deux et quatre diodes de pompe.

Selon la figure 11a les injections sont opérées selon des sens opposés.

La figure 11b représente une variante comprenant deux injections dans un premier sens et deux injections dans le sens opposé.

Il est possible d'utiliser d'autres configurations.

L'homme de l'art comprendra que la présente invention permet notamment d'obtenir des lasers monomodes de puissance ou des amplificateurs à fort gain.

Bien entendu la présente invention n'est pas limitée aux modes de réalisation particuliers qui viennent d'être décrits, mais s'étend à toutes variantes conformes à son esprit.

Références :

1) "Design of a device for pumping a double-clad fiber with a laser diode bar", L. A. Zenteno, Applied optics, Vol. 33, No. 31, 1994.
2) "High efficiency side-coupling of light into optical fibres using imbedded V-grooves" D. J. Ripin and L. Goldberg, Elect. Letters, Vol. 31, No 25, 1995.
3) US 5,864,644.
4) US 4,815,079.
5) US 5,534,558.

**Revendications**

1. Procédé de préparation d'un dispositif d'injection pour fibre optique, **caractérisé par le fait qu'**il comprend les étapes consistant à :

    . tailler en biseau une extrémité d'une fibre optique auxiliaire multimode (200) polie à son extrémité à un angle d'environ 1° à 20° et
    . placer et fixer cette extrémité biseautée de la fibre auxiliaire (200), sur la tranche de la section multimode d'une fibre principale (100) possédant une ouverture numérique supérieure à l'ouverture numérique de la fibre auxiliaire (200), ladite fibre principale (100) possédant un coeur (202) entouré d'une section multimode (104) elle-même entourée d'une gaine bas indice (106) et d'une gaine mécanique externe (108), la fibre amorce auxiliaire (200) étant fixée sur la fibre principale (100), par fusion après retrait local de la gaine bas indice (106) et de la gaine mécanique externe (108) de la fibre principale (100) et après avoir placé un verre présentant un faible Tg au niveau de la zone de fusion entre la fibre auxiliaire (200) et la fibre principale (100) pour éviter une déformation de la fibre auxiliaire (200) au cours de la fusion.

**2.** Procédé selon la revendication 1, **caractérisé par le fait que** le verre à faible Tg est du B2O3.

**3.** Procédé selon la revendication 1 ou 2, **caractérisé par le fait que** la fusion est assurée par micro chalumeau.

**4.** Procédé selon l'une des revendications 1 à 3, **caractérisé par le fait que** la fixation de la fibre auxiliaire (200) est assurée par fusion au laser, par exemple à l'aide d'un laser CO2.

**5.** Procédé selon l'une des revendications 1 à 4, **caractérisé par le fait que** la fixation de la fibre (200) est opérée par la combinaison d'une flamme et d'un laser CO2.

**6.** Procédé selon l'une des revendications 1 à 5, **caractérisé par le fait que** la fibre principale (100) est re-gainée avec une gaine bas indice (106) après fixation de la fibre auxiliaire (200).

**7.** Dispositif d'injection pour fibre optique obtenu par la mise en oeuvre du procédé conforme à l'une des revendications 1 à 6 **caractérisé par le fait qu'**il comprend :

- une fibre principale (100) possédant un coeur (202) entouré d'une section multimode (104) elle-même entourée d'une gaine bas indice (106) et d'une gaine mécanique externe (108), et
- une fibre auxiliaire multimode (200) dont l'extrémité biseautée (210) polie à son extrémité à un angle d'environ 1° à 20° est placée sur la tranche de la section multimode de la fibre principale (100), dans lequel la fibre auxiliaire (200) possède une ouverture numérique inférieure à l'ouverture numérique de la fibre principale (100), la fibre amorce auxiliaire (200) étant fixée sur la fibre principale (100), par fusion, après retrait local de la gaine bas indice (106) et de la gaine mécanique externe (108) de la fibre principale (100) et après avoir placé un verre présentant un faible Tg au niveau de la zone de fusion entre la fibre auxiliaire (200) et la fibre principale (100) pour éviter une déformation de la fibre auxiliaire (200) au cours de la fusion.

**8.** Dispositif selon la revendication 7, **caractérisé par le fait que** la fibre auxiliaire (200) est une fibre multimode qui a un coeur (202) d'indice inférieur ou égal à l'indice d'une section multimode (104) de la fibre principale (100).

**9.** Dispositif selon l'une des revendications 7 à 8, **caractérisé par le fait que** la différence d'indice entre le coeur (202) de la fibre auxiliaire (200) et la section multimode (104) de la fibre principale (100) est supérieure ou égale à la différence d'indice entre la section multimode (104) et la gaine bas indice (106) de la fibre principale (100).

**10.** Dispositif selon l'une des revendications 7 à 9, **caractérisé par le fait que** l'ouverture numérique de la fibre amorce (200) est de l'ordre de 0.15.

**11.** Dispositif selon l'une des revendications 7 à 10, **caractérisé par le fait que** la fibre principale (100) a une ouverture numérique de l'ordre de 0.4.

**12.** Dispositif selon l'une des revendications 7 à 11, **caractérisé par le fait que** la fibre principale (100) est une fibre à double gaine et coeur monomode.

**13.** Dispositif selon l'une des revendications 7 à 12, **caractérisé par le fait que** la fibre principale (100) comporte un coeur (102) monomode, une section multimode (104) qui présente au moins un méplat (105) et entoure le coeur (102), une gaine bas indice (106) et une gaine mécanique externe (108).

**14.** Dispositif selon l'une des revendications 7 à 13, **caractérisé par le fait que** la gaine bas indice (106) est un silicone.

**15.** Dispositif selon l'une des revendications 7 à 14, **caractérisé par le fait que** la section multimode (104) de la fibre principale (100) possède un indice inférieur à celui du coeur (102), la gaine bas indice (106) possède un indice inférieur à celui de la section multimode (104), tandis que la gaine externe mécanique (108) possède un indice supérieur à celui du coeur (102).

**16.** Dispositif selon l'une des revendications 7 à 15, **caractérisé par le fait que** la fibre auxiliaire (200) est une fibre possédant un coeur multimode (202), entouré d'une gaine optique (204) d'indice inférieur.

**17.** Dispositif selon la revendication 16, **caractérisé par le fait que** la fibre auxiliaire (200) possède également une gaine mécanique extérieure (206), d'indice supérieur à celui du coeur (202).

**18.** Dispositif selon l'une des revendications 7 à 17, **caractérisé par le fait que** plusieurs fibres auxiliaires (200) sont associées à une fibre principale (100).

**19.** Dispositif selon l'une des revendications 7 à 18, **caractérisé par le fait qu'**il comprend au moins une diode de pompe (300) en regard de l'extrémité d'une fibre auxiliaire (200).

**20.** Dispositif selon la revendication 19, **caractérisé par le fait que** la diode (300) est une diode de pompe multimode de puissance.

**21.** Dispositif selon l'une des revendications 19 ou 20, **caractérisé par le fait qu'**il comprend un pigtail de diode, c'est à dire entre chaque diode (300) et l'entrée de la fibre auxiliaire (200) associée, un tronçon de fibre adapté à la diode et dont la taille de coeur et l'ouverture numérique sont similaires à celle de la fibre auxiliaire (200).

**22.** Dispositif selon l'une des revendications 7 à 21, **caractérisé par le fait que** le pigtail est une fibre 100/125, d'ouverture numérique 0.15.

**23.** Dispositif selon l'une des revendications 19 ou 20, **caractérisé par le fait que** la diode (300) est couplée directement dans la fibre auxiliaire (200) à l'aide d'un système de lentilles.

**24.** Dispositif selon l'une des revendications 7 à 23, **caractérisé par le fait que** la fibre auxiliaire (200) a une ouverture numérique de l'ordre de 0.15, la fibre principale (100) a une ouverture numérique de l'ordre de 0.34, et l'angle de polissage est de l'ordre de 6°.

**25.** Application du dispositif conforme à l'une des revendications 7 à 24 pour la réalisation d'un laser.

**26.** Application du dispositif conforme à l'une des revendications 7 à 24 pour la réalisation d'un amplificateur optique.

**Patentansprüche**

**1.** Verfahren zum Vorbereiten einer Injektionsvorrichtung für Lichtwellenleiter, **dadurch gekennzeichnet, dass** es die folgenden Schritte umfasst:

. Abschrägen eines Endes eines multimodalen Hilfslichtwellenleiters (200), der an seinem Ende in einem Winkel von etwa 1° bis 20° poliert ist, und

. Anbringen und Befestigen dieses abgeschrägten Endes des Hilfslichtwellenleiters (200) am Abschnitt der multimodalen Sektion eines Hauptlichtwellenleiters (100), der eine numerische Apertur größer als die numerische Apertur des Hilfslichtwellenleiters (200) besitzt, wobei der besagte Hauptlichtwellenleiter (100) einen Kern (202) besitzt, der von einer multimodalen Sektion (104) umgeben ist, die selbst wiederum von einer Hülle mit niedrigem Index (106) und einer externen mechanischen Hülle (108) umgeben ist, wobei der Hilfsanschluss-Lichtwellenleiter (200) durch Fusion nach der lokalen Entfernung der Hülle mit niedrigem Index (106) und der externen mechanischen Hülle (108) des Hauptlichtwellenleiters (100) am Hauptlichtwellenleiter (100) befestigt wird, und nach dem Anbringen eines Glases mit einer niedrigen Tg im Bereich der Fusionszone zwischen dem Hilfslichtwellenleiter (200) und dem Hauptlichtwellenleiter (100), um eine Verformung des Hilfslichtwellenleiters (200) im Laufe der Fusion zu verhindern.

**2.** Verfahren nach Anspruch 1, **dadurch gekennzeichnet, dass** das Glas mit einer niedrigen Tg B203 ist.

**3.** Verfahren nach Anspruch 1 oder 2, **dadurch gekennzeichnet, dass** die Fusion durch einen Mikroschweißbrenner erfolgt.

**4.** Verfahren nach einem der Ansprüche 1 bis 3, **dadurch gekennzeichnet, dass** die Befestigung des Hilfslichtwellenleiters (200) durch Laserfusion, beispielsweise mithilfe eines $CO_2$ Lasers erfolgt.

**5.** Verfahren nach einem der Ansprüche 1 bis 4, **dadurch gekennzeichnet, dass** die Befestigung des Lichtwellenleiters (200) durch die Kombination einer Flamme und eines $CO_2$ Lasers vorgenommen wird.

**6.** Verfahren nach einem der Ansprüche 1 bis 5, **dadurch gekennzeichnet, dass** der Hauptlichtwellenleiter (100) nach der Befestigung des Hilfslichtwellenleiters (200) wieder mit einer Hülle mit niedrigem Index (106) umhüllt wird.

7. Injektionsvorrichtung für Lichtwellenleiter, die man durch die Anwendung des Verfahrens nach einem der Ansprüche 1 bis 6 erhält, **dadurch gekennzeichnet, dass** sie folgendes umfasst:

- einen Hauptlichtwellenleiter (100), der einen Kern (202) besitzt, der von einer multimodalen Sektion (104) umgeben ist, die selbst wiederum von einer Hülle mit niedrigem Index (106) und einer externen mechanischen Hülle (108) umgeben ist,
- einen multimodalen Hilfslichtwellenleiter (200), dessen abgeschrägtes Ende (210), das an seinem Ende in einem Winkel von etwa 1° bis 20° poliert ist, am Abschnitt der multimodalen Sektion eines Hauptlichtwellenleiters (100) angebracht ist, wobei der Hilfslichtwellenleiter (200) eine numerische Apertur kleiner als die numerische Apertur des Hauptlichtwellenleiters (100) besitzt, wobei der Hilfsanschluss-Lichtwellenleiter (200) durch Fusion nach der lokalen Entfernung der Hülle mit niedrigem Index (106) und der externen mechanischen Hülle (108) des Hauptlichtwellenleiters (100) am Hauptlichtwellenleiter (100) befestigt wird, und nach dem Anbringen eines Glases mit einer niedrigen Tg im Bereich der Fusionszone zwischen dem Hilfslichtwellenleiter (200) und dem Hauptlichtwellenleiter (100), um eine Verformung des Hilfslichtwellenleiters (200) im Laufe der Fusion zu verhindern.

8. Vorrichtung nach Anspruch 7, **dadurch gekennzeichnet, dass** der Hilfslichtwellenleiter (200) ein multimodaler Lichtwellenleiter ist, der einen Kern (202) mit einem Index kleiner oder gleich dem Index einer multimodalen Sektion (104) des Hauptlichtwellenleiters (100) aufweist.

9. Vorrichtung nach einem der Ansprüche 7 bis 8, **dadurch gekennzeichnet, dass** der Indexunterschied zwischen dem Kern (202) des Hilfslichtwellenleiters (200) und der multimodalen Sektion (104) des Hauptlichtwellenleiters (100) größer oder gleich dem Indexunterschied zwischen der multimodalen Sektion (104) und der Hülle mit niedrigem Index (106) des Hauptlichtwellenleiters (100) ist.

10. Vorrichtung nach einem der Ansprüche 7 bis 9, **dadurch gekennzeichnet, dass** die numerische Apertur des Anschluss-Lichtwellenleiters (200) in der Größenordnung von 0,15 liegt.

11. Vorrichtung nach einem der Ansprüche 7 bis 10, **dadurch gekennzeichnet, dass** der Hauptlichtwellenleiter (100) eine numerische Apertur in der Größenordnung von 0,4 aufweist.

12. Vorrichtung nach einem der Ansprüche 7 bis 11, **dadurch gekennzeichnet, dass** der Hauptlichtwellenleiter (100) ein Leiter mit Doppelhülle und einem monomodalen Kern ist.

13. Vorrichtung nach einem der Ansprüche 7 bis 12, **dadurch gekennzeichnet, dass** der Hauptlichtwellenleiter (100) einen monomodalen Kern (102) umfasst, eine multimodale Sektion (104), die zumindest eine Abflachung (105) aufweist und den Kern (102), eine Hülle mit niedrigem Index (106) und eine externe mechanische Hülle (108) umgibt.

14. Vorrichtung nach einem der Ansprüche 7 bis 13, **dadurch gekennzeichnet, dass** die Hülle mit niedrigem Index (106) ein Silikon ist.

15. Vorrichtung nach einem der Ansprüche 7 bis 14, **dadurch gekennzeichnet, dass** die multimodale Sektion (104) des Hauptlichtwellenleiters (100) einen Index kleiner als jener des Kerns (102) besitzt, Hülle mit niedrigem Index (106) einen Index kleiner als jener der multimodalen Sektion (104) besitzt, während die externe mechanische Hülle (108) einen Index größer als jener des Kerns (102) besitzt.

16. Vorrichtung nach einem der Ansprüche 7 bis 15, **dadurch gekennzeichnet, dass** der Hilfslichtwellenleiter (200) ein Lichtwellenleiter ist, der einen multimodalen Kern (202) besitzt, der von einer optischen Hülle (204) mit einem geringeren Index umgeben ist.

17. Vorrichtung nach Anspruch 16, **dadurch gekennzeichnet, dass** der Hilfslichtwellenleiter (200) ebenfalls eine externe mechanische Hülle (206) mit einem Index größer als jener des Kerns (202) besitzt.

18. Vorrichtung nach einem der Ansprüche 7 bis 17, **dadurch gekennzeichnet, dass** mehrere Hilfslichtwellenleiter (200) einem Hauptlichtwellenleiter (100) zugeordnet sind.

**19.** Vorrichtung nach einem der Ansprüche 7 bis 18, **dadurch gekennzeichnet, dass** sie zumindest eine Pumpendiode (300) gegenüber dem Ende eines Hilfslichtwellenleiters (200) umfasst.

**20.** Vorrichtung nach Anspruch 19, **dadurch gekennzeichnet, dass** die Diode (300) eine multimodale Leistungspumpendiode ist.

**21.** Vorrichtung nach einem der Ansprüche 19 oder 20, **dadurch gekennzeichnet, dass** sie ein Dioden-Pigtail umfasst, das heißt zwischen jeder Diode (300) und dem Eingang des zugehörigen Hilfslichtwellenleiters (200) einen Lichtwellenleiterabschnitt, der zur Diode passt, und dessen Kerngröße und numerische Apertur ähnlich jener des Hilfslichtwellenleiters (200) ist.

**22.** Vorrichtung nach einem der Ansprüche 7 bis 21, **dadurch gekennzeichnet, dass** das Pigtail ein 100/125 Lichtwellenleiter mit einer numerischen Apertur von 0,15 ist.

**23.** Vorrichtung nach einem der Ansprüche 19 oder 20, **dadurch gekennzeichnet, dass** die Diode (300) mithilfe eines Linsensystems direkt im Hilfslichtwellenleiter (200) verbunden ist.

**24.** Vorrichtung nach einem der Ansprüche 7 bis 23, **dadurch gekennzeichnet, dass** der Hilfslichtwellenleiter (200) eine numerische Apertur in der Größenordnung von 0,15 aufweist, wobei der Hauptlichtwellenleiter (100) eine numerische Apertur in der Größenordnung von 0,34 aufweist und der Polierwinkel die Größenordnung von 6° aufweist.

**25.** Anwendung der Vorrichtung nach einem der Ansprüche 7 bis 24 zur Herstellung eines Lasers.

**26.** Anwendung der Vorrichtung nach einem der Ansprüche 7 bis 24 zur Herstellung eines optischen Verstärkers.

**Claims**

**1.** Method for preparing an injection device for an optical fibre, **characterised by** the fact that it comprises the steps consisting of:

. cutting in a bevel one end of an auxiliary multimode optical fibre (200) polished at an end at an angle of approximately 1° to 20°, and
. placing and fixing this bevelled end of the auxiliary fibre (200), on the edge of the multimode section of a main fibre (100) having a numerical aperture larger than the numerical aperture of the auxiliary fibre (200), said main fibre (100) having a core (202) surrounded by a multimode section (104) itself surrounded by a low-index sheath (106) and an external mechanical sheath (108), the auxiliary initiation fibre (200) being fixed to the main fibre (100), by fusion after local removal of the low-index sheath (106) and the external mechanical sheath (108) of the main fibre (100) and after having placed a glass having a low Tg at the fusion zone between the auxiliary fibre (200) and the main fibre (100) in order to prevent deformation of the auxiliary fibre (200) during fusion.

**2.** Method according to claim 1, **characterised by** the fact that the glass with a low Tg is B203.

**3.** Method according to claim 1 or 2, **characterised by** the fact that the fusion is provided by microtorch.

**4.** Method according to one of claims 1 to 3, **characterised by** the fact that the auxiliary fibre (200) is fixed by laser fusion, for example using a $CO_2$ laser,

**5.** Method according to one of claims 1 to 4, **characterised by** the fact that the fibre (200) is fixed by the combination of a flame and a $CO_2$ laser.

**6.** Method according to one of claims 1 to 5, **characterised by** the fact that the main fibre (100) is re-sheathed with a low-index sheath (106) after fixing of the auxiliary fibre (200).

**7.** Injection device for an optical fibre obtained using the method according to one of claims 1 to 6, **characterised by** the fact that it comprises:

- a main fibre (100) having a core (202) surrounded by a multimode section (104) itself surrounded by a low-index sheath (106) and an external mechanical sheath (108), and
- an auxiliary multimode fibre (200), the bevelled end (210) of which, polished at its end at an angle of approximately 1° to 20°, is placed on the edge of the multimode section of the main fibre (100), in which the auxiliary fibre (200) has a numerical aperture smaller than the numerical aperture of the main fibre (100), the auxiliary initiation fibre (200) being fixed to the main fibre (100) by fusion, after local removal of the low-index sheath (106) and the external mechanical sheath (108) of the main fibre (100) and after having placed a glass having a low Tg at the fusion zone between the auxiliary fibre (200) and the main fibre (100) in order to prevent deformation of the auxiliary fibre (200) during fusion.

8. Method according to claim 7, **characterised by** the fact that the auxiliary fibre (200) is a multimode fibre that has a core (202) with an index less than or equal to the index of the multimode section (104) of the main fibre (100).

9. Device according to one of claims 7 to 8, **characterised by** the fact that the difference in index between the core (202) of the auxiliary fibre (200) and the multimode section (104) of the main fibre (100) is greater than or equal to the difference in index between the multimode fibre (104) and the low-index sheath (106) of the main fibre (100).

10. Device according to one of claims 7 to 9, **characterised by** the fact that the numerical aperture of the initiation fibre (200) is around 0.15.

11. Device according to one of claims 7 to 10, **characterised by** the fact the main fibre (100) has a numerical aperture of around 0.4.

12. Device according to one of claims 7 to 11, **characterised by** the fact that the main fibre (100) is a fibre with a double sheath and a monomode core.

13. Device according to one of claims 7 to 12, **characterised by** the fact that the main fibre (100) comprises a monomode core (102), a multimode section (104) that has at least one flat (105) and surrounds the core (102), a low-index sheath (106) and an external mechanical sheath (108).

14. Device according to one of claims 7 to 13, **characterised by** the fact that the low-index sheath (106) is a silicone.

15. Device according to one of claims 7 to 14, **characterised by** the fact that the multimode section (104) of the main fibre (100) has an index less than that of the core (102), the low-index sheath (106) has an index less than that of the multimode section (104), while the mechanical external sheath (108) has an index greater than that of the core (102).

16. Device according to one of claims 7 to 15, **characterised by** the fact that the auxiliary fibre (200) is a fibre having a multimode core (202), surrounded by an optical sheath (204) with a lower index.

17. Device according to claim 16, **characterised by** the fact that the auxiliary fibre (200) also has an external mechanical sheath (206) with an index greater than that of the core (202).

18. Device according to one of claims 7 to 17, **characterised by** the fact that a plurality of auxiliary fibres (200) are associated with a main fibre (100).

19. Device according to one of claims 7 to 18, **characterised by** the fact that it comprises at least one pump diode (300) opposite the end of an auxiliary fibre (200).

20. Device according to claim 19, **characterised by** the fact that the diode (300) is a multimode power pump diode.

21. Device according to one of claims 19 or 20, **characterised by** the fact that it comprises a diode pigtail, that is to say, between each diode (300) and the entry to the associated auxiliary fibre (200), a section of fibre adapted to the diode and the core size and numerical aperture of which are similar to that of the auxiliary fibre (200).

22. Device according to one of claims 7 to 21, **characterised by** the fact that the pigtail is a 100/125 fibre, with a numerical aperture of 0.15.

23. Device according to one of claims 19 or 20, **characterised by** the fact that the diode (300) is coupled directly in the auxiliary fibre (200) by means of a system of lenses.

24. Device according to one of claims 7 to 23, **characterised by** the fact that the auxiliary fibre (200) has a numerical aperture of around 0.15, the main fibre (100) has a numerical aperture of around 0.34, and the polishing angle is around 6°.

25. Application of the device according to one of claims 7 to 24 for producing a laser.

26. Application of the device according to one of claims 7 to 24 for producing an optical amplifier.

FIG.1

FIG.2

FIG.3

FIG_4

FIG_5

## Angle limite de réflexion totale

ON fibre double clad

FIG_6

| | |
|---|---|
| ◆ | 6 degré |
| ϲ | 8 degré |
| ✕ | 10 degré |

## FIG_7

200

210

A=1°-20°

## FIG_8a

200

100

## FIG_8b

200

100

## FIG_9a

200

330

100

## FIG_9b

350

360

340

FIG_10

FIG_11a

FIG_11b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5999673 A
- EP 0371675 A
- US 4784452 A
- US 4962986 A
- EP 0320990 A
- FR 7815796
- US 5864644 A
- US 4815079 A
- US 5534558 A

**Littérature non-brevet citée dans la description**

- **L. A. ZENTENO.** Design of a device for pumping a double-clad fiber with a laser diode bar. *Applied optics,* 1994, vol. 33 (31
- **D. J. RIPIN ; L. GOLDBERG.** High efficiency side-coupling of light into optical fibres using imbedded V-grooves. *Elect. Letters,* 1995, vol. 31 (25